Europäisches Patentamt

European Patent Office

Office européen des brevets

(19)

(11) Publication number: **0 026 787**
**B1**

(12) **EUROPEAN PATENT SPECIFICATION**

(45) Date of publication of patent specification: **20.07.83**

(51) Int. Cl.³: **B 23 G 5/06, B 23 G 5/20**

(21) Application number: **79900189.6**

(22) Date of filing: **16.01.79**

(86) International application number:
**PCT/JP79/00008**

(87) International publication number:
**WO 80/00807 01.05.80 Gazette 80/10**

(54) **TAPPING TOOL FOR HOLES AS CAST.**

(30) Priority: **20.10.78 JP 128571/78**

(43) Date of publication of application:
**15.04.81 Bulletin 81/15**

(45) Publication of the grant of the patent:
**20.07.83 Bulletin 83/29**

(84) Designated Contracting States:
**DE FR GB**

(56) References cited:
**GB - A - 615 225**
**GB - A - 629 458**
**GB - A - 1 271 343**
**JP - B - 53 027 519**
**JP - U - 49 084 787**
**JP - U - 51 114 790**
**JP - U - 51 139 489**
**JP - U - 53 010 499**
**SU - A - 275 684**
**US - A - 1 395 198**
**US - A - 1 520 714**
**US - A - 1 543 007**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **OKUNISHI, Hiromu**
**2-27-401, 1, Sayamadai, 2-chome**
**Sayama-shi, Saitama 350-13 (JP)**
Inventor: **WADA, Minoru**
**124-39, Ooaza-Aoyagi**
**Sayama-shi, Saitama 350-13 (JP)**

(74) Representative: **Heunemann, Dieter (DE)**
**Vossius-Vossius-Hiltl-Tauchner-Heunemann**
**Patentanwälte Siebertstrasse 4**
**D-8000 München 86 (DE)**

(56) References cited:
**US - A - 2 300 310**
**US - A - 2 389 548**
**US - A - 3 245 099**
**US - A - 3 246 351**

Courier Press, Leamington Spa, England

Tapping tool for holes as cast

This invention is concerned with a tapping tool for a cast hole, which subjects the cast hole, formed in an article of manufacture at the time of its casting, to a female thread cutting work.

The cast hole in a cast article is liable to fluctuations in its precision between its axial centers, and, moreover, since a marginal allowance is non-uniform due to differences in the drafting gradient, and so on, breakage of the tap tends to occur readily when the female thread cutting work is effected by direct tapping, and it has been almost impossible to obtain a female thread having high precision. In view of the circumstances, so far general practice has been to subject the cast hole to a sub-hole machining or rough-machining followed by the female thread cutting work by the use of the tap. However, when using this expedient, not only the number of the process steps increases, but also a drill for perforating the sub-hole would inevitably follow the shape of the cast hole at the time of the sub-hole machining with the consequence that no accurate sub-hole can be perforated. As the result of this, the axial center of the sub-hole and the axial center of the tap become discrepant, hence it is impossible to obtain a female thread of high precision. Moreover, differences between the two axial centers would constitute a cause for inviting breakage of the tap itself.

U.S. Patent 1 543 007 discloses a tap in which the top surfaces of the teeth of the tapered portion are aligned with relation to the axis of the tap in order to provide a smoother action and ensure a longer life of the tool.

The guide section of this tap does, however, not comprise any blades for performing front cutting. Thus this tap is only applicable to tapping already accurately drilled bores and not to the use with possibly mal-aligned cast holes.

The Japanese Utility Model 51—114790 discloses a tool for tapping a female screw thread in a workpiece of large size, and comprises a drill with a blade section and a tap. The tap is axially slidable relative to the blade section by means of an urging spring surrounding the shaft section of the drill. For preventing any mal-alignment in the drilling and tapping operations the rotating blade of the blade section rotates in mutually opposite directions to the tap during drilling and tapping operations. The sub-hole machining or rough-machining is first performed by means of the blade section and then the female screw thread is tapped by changing the rotational direction of the tapping blade. This means that two process steps are required for tapping cast holes.

British Patent 615 225 discloses a screw thread tap with spiral gashes at its leading end for causing the swarf to be directed away from the front of the tap.

The present invention aims at providing a tapping tool capable of effecting female thread cutting work of high precision with good efficiency with respect to the cast hole in the abovementioned cast article, and also having improved tool life.

The abovementioned object of the present invention is attained by a tapping tool as claimed.

With the tapping tool according to the invention it is possible to effect an accurate sub-hole machining by the cutting blades at the tip end of the guide section by first cutting the front face of the cast hole, and then by the action of a reamer of the guide section, even if there is fluctuation in precision between the axial centers in the cast hole, differences in the drafting gradient, and so forth. Moreover, since the female thread cutting work is effected by the tap section in continuation to the sub-hole machining, the axial center of the sub-hole and the axial center of the tap are perfectly coincided, whereby a female thread of high precision can be obtained readily and quickly. Also, due to particular dimensional relationships among those parts of the tool, there are no undue forces to act on the tapping section, so that the life of the tool can be improved.

The invention is described in detail below with reference to the drawings in which Figure 1 is a front view of a first embodiment of the machine tool according to the present invention; Figure 2 is a bottom plan view of the first embodiment; Figure 3 is an explanatory diagram showing the dimensions of each part of the first embodiment; Figure 4 is a partial longitudinal cross-section of the first embodiment; Figure 5 is a partial longitudinal cross-sectional view of a second embodiment, in which the feeding hole for the coolant, etc. has been modified; Figure 6 is a partial front view of a third embodiment, in which the guide section has been modified; Figure 7 is a partial front view of a fourth embodiment, in which the guide section has been modified; and Figure 8 is an explanatory diagram showing the dimensions of each part of a fifth embodiment, in which the tap section has been modified.

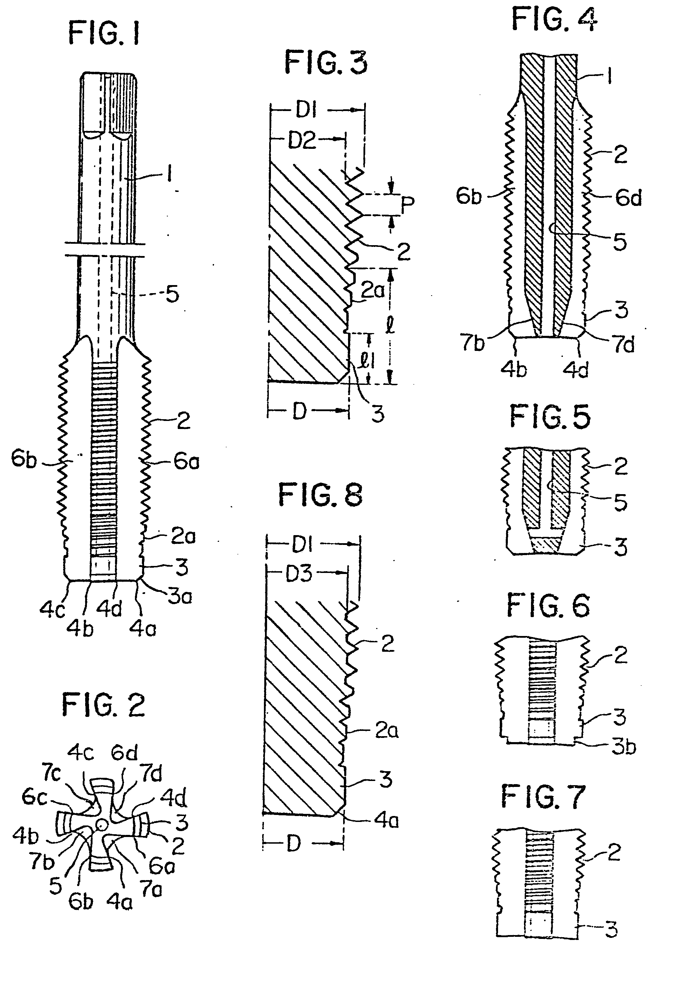

In Figure 1, numeral 1 refers to a shank which has a tap section or tapping section 2 continuous to the shank 1 and further a guide section 3 continuous to the tap section. At the tip end of the guide section 3 there are integrally provided a plurality of cutting blades 4a—4d capable of performing the front face cutting.

As shown in Figure 3, the diameter D of the abovementioned guide section 3 satisfies the relationship of $D_2 < D < D_1$ with respect to the outer diameter $D_1$ and the root diameter $D_2$ of the tap section 2. The reason for this is that with a relationship of $D > D_1$ no thread cutting can be done, and that with a relationship of $D_2 > D$ no improvement can be achieved in the torque reduction of the tap and in the reduction in the quantity of cutting, and the life of the tool would be shortened. Also, the overall length $l$ from the tip end of the cutting blade of the abovementioned guide section 3 to the terminal end of the engaging tapered part 2a of the tap section 2 is set in a relationship of $2P \leqq l \leqq 10P$ with respect to the pitch P of the tap section 2. The reason for this is that with a relationship of $l > 10P$ the tap is easily broken and causes rotational errors, etc., and, that with a relationship of $l < 2P$ the tool oscillates, thus inviting the surface precision to lower. Further, the length $l_1$ of the abovementioned guide section 3 is set in a relationship of $l_1 \geqq P/n$ with respect to the pitch P of the tap section 2 and the groove number $n$. The reason for this is that with a relationship of $l_1 < P/n$ the sub-hole cannot be formed with the cutting blades 4a—4d of the guide section 3.

A feeding port 5 for coolant or air is provided at the axial center of the abovementioned shank 1, tap section 2, and guide section 3, one end of which is open to the end face of the shank, and the other end of which is open to the end face of the guide section as shown in Figures 1, 2, 4, 6 and 7. The abovementioned feeding port 5 may be branched in the vicinity of the tip end of the guide section 3, and be open to each of the grooves 6a—6d, as shown in Figure 5. The coolant or air which is supplied through the feeding port 5 also has an effect of discharging chips.

The abovementioned guide section 3 has a tapered surface 3a at its tip end as shown in Figure 1, or a staged part 3b as shown in Figure 6 so as to perform size-reduction of the chips produced at the time of the cutting operation, although it may be shaped straight, as shown in Figure 7, depending on necessity. Also, in order to improve discharging of the chips, tapered surfaces 7a—7d with a downward gradient toward the tip end of the guide section are formed in the grooves 6a—6d extending from the abovementioned tap section 2 to the tip end of the guide section 3.

Figure 8 shows another embodiment of the tapping tool, in which the tap section 2 has a thread form which has a cylindrical portion at its root or valley, the root diameter $D_3$ of the valley and the diameter D of the guide section 3 being maintained in a relationship of $D_3 = D$. The other dimensional requirements are the same as for the abovementioned embodiment.

As stated above, when the bottom of the valley of the tap section 2 is made cylindrical and the diameter $D_3$ of the valley is made identical with the diameter D of the guide section 3, rigidity of the tap 2 increases and the life of the tap section improves much more.

Incidentally, also in the tool shown in Figure 8, the feeding port 5 for air or coolant as shown in the embodiments of Figures 4 and 5 is adopted, and also the tapered surfaces 7a—7d of the grooves 6a—6d (Figure 4), the tapered surface 3a of the guide section 3, the tapered surface 3b thereof, the straight guide section, and the further features of the other embodiments are adopted.

**Claims**

1. A tapping tool for use with cast holes, provided with a shank (1), a tapping section (2) adjacent to the shank (1) and comprising a part of full tapping diameter and a tapered part (2a), and a guide section (3) adjacent to the tapping section (2), wherein

$$D_2 < D < D_1$$

and

$$l_1 \geqslant P/n$$

where D is the diameter of the guide section (3),
$D_1$ is the outside diameter of the tapping section (2),
$D_2$ is the root diameter of the tapping section (2),
P is the pitch of the tapping section (2),
n is the number of grooves in the tapping section, and
$l_1$ is the length of the guide section (3),
characterised in that cutting blades (4a—4d) capable of performing front face cutting with the tapping tool rotating in the same direction as for tapping are integrally formed at the tip end of the guide section (3) and in that

$$2P \leqslant l \leqslant 10P$$

where l is the overall length of the guide section (3) and the tapered part (2a).

2. A tapping tool according to claim 1, in which said guide section (3) has a notched portion (3b) at the tip end thereof.

3. A tapping tool according to claim 1, in which said guide section (3) has a tapered surface (3a) at the tip end thereof.

4. A tapping tool according to any of claims 1 to 3, in which grooves (6a—6d) in said tapping section (2) reach the tip end of the guide section (3), and have tapered surfaces with a downward gradient toward the tip end of said guide section (3).

5. A tapping tool according to any of claims 1 to 4, in which a feeding port (5) for air or coolant extends from said shank (1) to said guide section (3) through said tapping section (2) and opens to the tip end of the guide section (3) or in its vicinity.

6. A tapping tool according to any of claims 1 to 5, wherein the thread of the tapping section (2) has a cylindrical portion at its root, with a diameter $(D_3)$ equal to D.

## Revendications

1. Outil de taraudage, susceptible d'être utilisé dans des trous moulés, muni d'une tige (1), d'une partie de taraudage (2) adjacente à la tige (1) et comprenant une zone de diamètre de taraudage complet et une zone (2a) effilée, et une partie de guidage (3) adjacente à la partie de taraudage (2), dans lequel

$$D_2 < D < D_1$$

et

$$l_1 \geqslant P/n$$

où D est le diamètre de la partie de guidage (3),
$D_1$ est le diamètre extérieur de la partie de taraudage (2),
$D_2$ est le diamètre intérieur de la partie de taraudage (2),
P est le pas de la partie de taraudage (2),
n est le nombre de gorges dans la partie de taraudage, et
$l_1$ est la longueur de la partie de guidage (3), caractérisé par le fait que des lames de couple (4a—4d), susceptibles de réaliser une taille de front lorsque l'outil de taraudage tourne dans la même direction que pour tarauder, sont formées d'une seule pièce à l'extrémité de la partie de guidage (3) et que

$$2P \leqslant l \leqslant 10P$$

où l est la longueur totale de la partie de guidage (3) et de la partie effilée (2a).

2. Outil de taraudage selon la revendication 1, caractérisé par le fait que ladite partie de guidage (3) possède une zone entaillée (3b) à son extrémité.

3. Outil de taraudage selon la revendication 1, caractérisé par le fait que ladite partie de guidage (3) possède une surface effilée (3a) à son extrémité.

4. Outil de taraudage selon l'une quelconque des revendications 1 à 3, caractérisé par le fait que les gorges (6a—6d) dans ladite partie de taraudage (2) atteignent l'extrémité de la partie de guidage (3) et possèdent des surfaces effilées avec un gradient vers le bas vers l'extrémité de ladite partie de guidage (3).

5. Outil de taraudage selon l'une quelconque des revendications 1 à 4, caractérisé par le fait qu'un conduit d'alimentation (5) pour de l'air ou un fluide de refroidissement s'étend depuis ladite tige (1) vers ladite partie de guidage (3) à travers ladite partie de taraudage (2) et s'ouvre à l'extrémité de la partie de guidage (3) ou dans son voisinage.

6. Outil de taraudage selon l'une quelconque des revendications 1 à 5, caractérisé par le fait que le filet de la partie de taraudage (2) possède une zone cylindrique à sa partie intérieure avec un diamètre ($D_3$) égal à D.

## Patentansprüche

1. Gewindekern-Werkzeug für Löcher in Spritzgußteilen, mit einem Schaft (1), einem diesem Schaft (1) benachbarten Gewindekernabschnitt (2) mit einem Teil mit vollem Gewindekerndurchmesser und einem sich verjüngenden teil (2a), und mit einem dem Gewindekernabschnitt (2) benachbarten Führungsabschnitt (3), wobei

$$D_2 < D < D_1$$

und

$$l_1 \geqslant P/n$$

wobei D = Durchmesser des Führungsabschnitts (3)
$D_1$ = Außendurchmesser des Gewindekernabschnitts (2)
$D_2$ = innerer Gewindedurchmesser des Gewindekernabschnitts (2)
P = Ganghöhe des Gewindekernabschnitts (2)
n = Nutzahl im Gewindekernabschnitt und
$l_1$ = Länge des Führungsabschnitts (3),
dadurch gekennzeichnet, daß am freien Ende des Führungsabschnitts (3) Schneidflügel (4a bis 4d) einstückig angeformt sind, die beim Drehen des Gewindekern-Werkzeugs in der gleichen Richtung wie beim Gewindebohren einen Vorderflächenschnitt ermöglichen, und daß

$$2P \leqslant l \leqslant 10P$$

wobei l = Gesamtlänge des Führungsabschnitts (3) und des sich verjüngenden Teils (2a).

2. Gewindekern-Werkzeug nach Anspruch 1, dadurch gekennzeichnet, daß der Führungsabschnitt (3) an seinem freien Ende eine Einkerbung (3b) aufweist.

3. Gewindekern-Werkzeug nach Anspruch 1, dadurch gekennzeichnet, daß der Führungsabschnitt (3) an seinem freien Ende eine sich verjüngende Fläche (3a) aufweist.

4. Gewindekern-Werkzeug nach einem der Ansprüche 1 bis 3, dadurch gekennzeichnet, daß die Nuten (6a bis 6d) im Gewindekernabschnitt (2) bis zum freien Ende des Führungsabschnitts (3) reichen und sich verjüngende Flächen mit abnehmendem Gradienten zum freien Ende des Führungsabschnitts (3) aufweisen.

5. Gewindekern-Werkzeug nach einem der Ansprüche 1 bis 4, dadurch gekennzeichnet, daß sich vom Schaft (1) durch den Gewindekernabschnitt (2) zum Führungsabschnitt (3) ein Einlaßkanal (5) für Luft oder Kühlmittel erstreckt und am freien Ende des Führungsabschnitts (3) oder benachbart dazu mündet.

6. Gewindekern-Werkzeug nach einem der Ansprüche 1 bis 5, dadurch gekennzeichnet, daß das Gewinde des Gewindekernababschnitts (2) an seiner Wurzel einen Zylinderabschnitt aufweist, dessen Durchmesser $(D_3)$ gleich D ist.

0 026 787

FIG. 1

FIG. 3

FIG. 4

FIG. 2

FIG. 8

FIG. 5

FIG. 6

FIG. 7